(19) **Europäisches Patentamt European Patent Office Office européen des brevets**

(11) **EP 1 825 319 B1**

(12) **FASCICULE DE BREVET EUROPEEN**

(45) Date de publication et mention
de la délivrance du brevet:
**08.05.2013 Bulletin 2013/19**

(51) Int Cl.:
*G02C 7/12* *(2006.01)*   *G02C 7/10* *(2006.01)*
*G02C 7/08* *(2006.01)*

(21) Numéro de dépôt: **05826579.4**

(86) Numéro de dépôt international:
**PCT/FR2005/003148**

(22) Date de dépôt: **15.12.2005**

(87) Numéro de publication internationale:
**WO 2006/067309 (29.06.2006 Gazette 2006/26)**

(54) **PROCEDE DE REALISATION D'UN ELEMENT OPTIQUE TRANSPARENT, COMPOSANT OPTIQUE INTERVENANT DANS CE PROCEDE ET ELEMENT OPTIQUE AINSI OBTENU**

**VERFAHREN ZUR HERSTELLUNG EINES TRANSPARENTEN OPTISCHEN ELEMENTS, IN DIESEM VERFAHREN VERWENDETE OPTISCHE KOMPONENTE UND MIT DIESEM VERFAHREN HERGESTELLTES OPTISCHES ELEMENT**

**METHOD FOR MAKING A TRANSPARENT OPTICAL ELEMENT, OPTICAL COMPONENT USED IN SAID METHOD AND RESULTING OPTICAL ELEMENT**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.12.2004 FR 0413536**

(43) Date de publication de la demande:
**29.08.2007 Bulletin 2007/35**

(73) Titulaire: **ESSILOR INTERNATIONAL (Compagnie Générale d'Optique) 94220 Charenton-le-Pont (FR)**

(72) Inventeurs:
• **CANO, Jean-Paul,
Essilor Int. Comp. Gén. d'Optique
F-94220 Charenton-le-Pont (FR)**
• **BOVET, C.,
Essilor Int. Comp. Gén. d'Optique
F-94220 Charenton-le-Pont (FR)**

(74) Mandataire: **Cabinet Plasseraud
52, rue de la Victoire
75440 Paris Cedex 09 (FR)**

(56) Documents cités:
**WO-A-03/012542          DE-A1- 19 714 434
US-A- 5 067 795          US-A1- 2002 114 054
US-A1- 2002 140 899**

**Description**

La présente invention concerne la réalisation d'éléments transparents incorporant des fonctions optiques. Elle s'applique notamment à la réalisation de verres ophtalmiques ayant diverses propriétés optiques.

Les verres correcteurs d'amétropie sont traditionnellement fabriqués en mettant en forme un matériau transparent d'indice de réfraction plus élevé que l'air. La forme des verres est choisie de façon que la réfraction aux interfaces entre le matériau et l'air provoque une focalisation appropriée sur la rétine du porteur. Le verre est généralement découpé pour être adapté à une monture, avec un positionnement approprié par rapport à la pupille de l'oeil corrigé.

Il est connu de faire varier l'indice de réfraction au sein du matériau d'une lentille ophtalmique, ce qui peut limiter les contraintes géométriques (voir par exemple EP-A-0 728 572). Cette méthode a surtout été proposée pour des lentilles de contact. Le gradient d'indice est obtenu par exemple par diffusion, irradiation sélective ou chauffage sélectif au cours de la fabrication de l'objet solide constituant la lentille. Si on prévoit une fabrication pour chaque cas d'amétropie traitable, la méthode ne se prête pas bien à une large industrialisation. Sinon, on peut fabriquer industriellement des séries d'objets à gradient d'indice, sélectionner celui qui est le plus proche de ce qui convient à un oeil à corriger et le remettre en forme par usinage et polissage pour l'adapter à cet oeil. Dans ce cas, la nécessité de remettre en forme les verres fait perdre beaucoup de l'attrait de la méthode par rapport aux méthodes traditionnelles.

Dans la demande de brevet US 2004/0008319, il est proposé de réaliser une modulation d'indice de réfraction parallèlement à la surface d'une lentille telle qu'un verre de lunettes, à l'aide de têtes de projection d'encre du genre employé dans les imprimantes. Ces têtes sont commandées pour déposer des gouttes de solutions de polymères d'indices différents sur la surface de l'objet de façon à obtenir une variation souhaitée de l'indice le long de la surface. Les polymères sont ensuite solidifiés par irradiation ou élimination de solvant. La maîtrise des phénomènes physiques d'interaction entre les gouttes et le substrat lors du dépôt et de la solidification rend cette méthode très difficile à pratiquer. En outre, sa mise en oeuvre à grande échelle est problématique car, là aussi, la modulation d'indice est obtenue au cours de la fabrication de l'objet solide constituant la lentille et la personnalisation ultérieure suppose une remise en forme du verre.

Un autre domaine d'application de l'invention est celui des verres photochromiques. La structure d'un tel verre incorpore une couche dont le spectre d'absorption lumineuse dépend de la lumière reçue. Le colorant photochromique de cette couche est habituellement solide, bien qu'on sache que les liquides ou les gels présentent des propriétés supérieures, notamment en termes de rapidité de réaction aux variations de luminosité.

On connaît tout de même des verres dans lesquels le colorant photosensible est un liquide ou un gel, des espaceurs étant prévus dans l'épaisseur de la couche pour définir le volume occupé par le colorant entre les couches transparentes adjacentes, avec une barrière étanche sur la périphérie de ce volume. Un tel verre est fabriqué pour une monture de lunettes spécifique. Il n'est pas possible de le découper pour l'adapter à une autre monture. Il est en outre difficile de l'adapter à l'amétropie d'un oeil à corriger.

Il peut aussi être intéressant de faire varier l'absorption lumineuse parallèlement à la surface du verre, et/ou de rendre cette absorption dépendante de la polarisation de la lumière.

Parmi les autres types de verres ophtalmiques auxquels l'invention peut s'appliquer, on peut citer les systèmes actifs, dans lesquels une variation d'une propriété optique résulte d'un stimulus électrique. C'est le cas des verres électrochromes, où encore des verres à propriétés réfractives modulables (voir par exemple US-A-5 359 444 ou WO 03/077012). Ces techniques font généralement appel à des cristaux liquides ou à des systèmes électrochimiques.

Parmi ces différents types de verres, ou d'autres non nécessairement limités à l'optique ophtalmique, il serait souhaitable de pouvoir proposer une structure qui permette de mettre en place une ou plusieurs fonction(s) optique(s) de façon souple et modulaire, tout en conservant la possibilité de découper l'élément optique obtenu en vue de l'intégrer à une monture imposée ou choisie par ailleurs, ou à tout autre moyen de maintien dudit élément optique.

Un but de la présente invention est de répondre à ce besoin. Un autre but est que l'élément optique soit industrialisable dans de bonnes conditions. WO 03/012 542 divulgue un procédé de réalisation d'un moyen d'affichage ayant un ensemble transparent de cellules contenant une substance à propriété optique.

L'invention propose ainsi un procédé de réalisation d'un élément optique transparent selon la revendication 1, comprenant les étapes suivantes:

-   produire un composant optique ayant au moins un ensemble transparent de cellules juxtaposées parallèlement à une surface du composant, chaque cellule ayant des dimensions comprises entre supérieur à 100 $\mu$m et jusqu'à 500 $\mu$m parallèlement à la surface du composant, chaque cellule étant hermétiquement fermée et contenant une substance à propriété optique; et

-   découper le composant optique le long d'un contour défini sur ladite surface, correspondant à une forme déterminée pour l'élément optique.

Les cellules peuvent être remplies avec des substances diverses choisies pour leurs propriétés optiques, par exemple liées à leur indice de réfraction, à leur capacité d'absorption lumineuse ou de polarisation, à leur réponse à des stimuli électriques ou lumineux, etc.

La structure se prête donc à de nombreuses applications, particulièrement celles faisant appel à des fonctions optiques évoluées. Elle implique une discrétisation par pixels de la surface de l'élément optique, ce qui offre une grande souplesse dans la conception mais aussi dans la mise en oeuvre de l'élément.

En particulier, il est remarquable que le composant optique puisse être découpé selon des formes périphériques souhaitées, permettant son intégration et son adaptation sur divers supports de maintien tels que, par exemple, une monture ou un casque. Le procédé peut aussi comprendre, sans affecter l'intégrité de la structure, une étape de perçage à travers le composant optique, pour la fixation de l'élément optique sur son support de maintien.

Dans le cadre de l'invention, l'ensemble de cellules juxtaposées est de préférence configuré de façon à ce que le facteur de remplissage $\tau$, défini comme la surface occupée par les cellules remplies par la substance, par unité de surface du composant, soit supérieur à 90 %. En d'autres termes, les cellules de l'ensemble occupent au moins 90 % de la surface du composant, du moins dans une région du composant pourvue de l'ensemble de cellules. D'une façon avantageuse le facteur de remplissage est compris entre 90 % et 99,5 % inclus, et encore plus préférentiellement le facteur de remplissage est compris entre 96 % et 98,5 % inclus.

La structure se prête donc à de nombreuses applications, particulièrement celles faisant appel à des fonctions optiques évoluées. Elle implique une discrétisation par pixels de la surface de l'élément optique, ce qui offre une grande souplesse dans la conception mais aussi dans la mise en oeuvre de l'élément. Chaque pixel comprend une cellule délimitée par des parois. On comprend aisément que lesdites parois constituent une discontinuité à la surface du composant optique et qu'elles sont à l'origine d'un défaut de transparence du composant optique et de ce fait elles peuvent entraîner un défaut de transparence de l'élément optique comprenant un tel composant.

Au sens de l'invention on entend qu'un composant optique est transparent lorsque l'observation d'une image au travers dudit composant optique est perçue sans perte significative de contraste, c'est-à-dire lorsque la formation d'une image au travers dudit composant optique est obtenue sans nuisance de la qualité de l'image. Les parois séparant les cellules du composant optique interagissent avec la lumière en la diffractant. La diffraction est définie comme le phénomène d'éparpillement de la lumière que l'on observe lorsqu'une onde lumineuse est matériellement limitée (J-P. PEREZ - Optique, Fondements et applications 7ème édition - DUNOD - octobre 2004, p. 262). De ce fait la perception d'un point lumineux au travers d'un composant optique comprenant de telles parois est dégradée. La diffraction microscopique se traduit macroscopiquement par de la diffusion. Cette diffusion macroscopique ou diffusion incohérente se traduit par un aspect de halo diffusant de la structure pixellisée du composant optique et donc par une perte de contraste de l'image observée au travers de ladite structure. Cette perte de contraste est assimilable à une perte de transparence, telle que définie précédemment. Cet effet de diffusion macroscopique n'est pas acceptable pour la réalisation d'un élément optique comprenant un composant optique pixellisée tel que compris au sens de l'invention. Ceci est d'autant plus vrai dans le cas où ledit élément optique est une lentille ophtalmique, laquelle doit d'une part être transparente et d'autre part ne comporter aucun défaut cosmétique pouvant gêner la vision du porteur d'un tel élément optique.

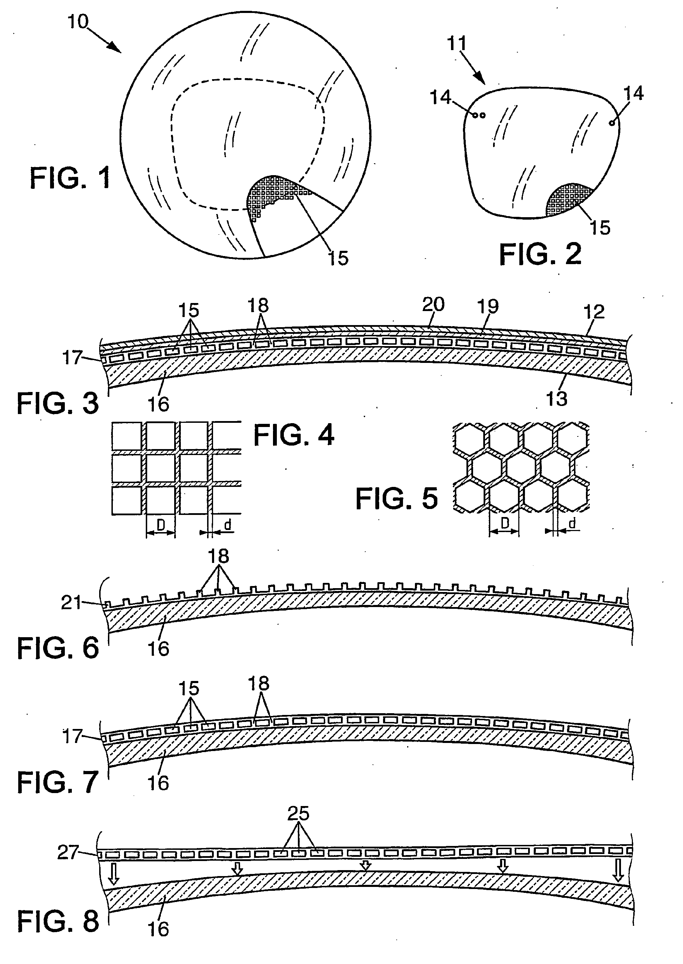

Un moyen d'atténuer cette diffusion macroscopique consiste à dimensionner les cellules de façon adaptée. La géométrie du réseau - de cellules se caractérise par des paramètres dimensionnels qui peuvent généralement se ramener aux dimensions (D) des cellules parallèlement à la surface du composant optique, à leur hauteur correspondant à la hauteur h des parois qui les séparent, et à l'épaisseur d de ces parois (mesurée parallèlement à la surface du composant). Les dimensions des cellules parallèlement à la surface définissent l'aire $\sigma$ d'une cellule. Dans le cas simple où les cellules sont carrées avec des côtés de longueur D (figure 4), cette aire est donnée par $\sigma = D^2$, et le facteur de remplissage est $\tau = \dfrac{D^{2\cdot}}{(D+d)^2}$. Les expressions de $\sigma$ et $\tau$ sont aisément obtenues pour toute autre organisation spatiale des cellules.

L'énergie diffractée varie à l'inverse du facteur de remplissage. Si le rapport $\rho$ de l'aire occupée par les cellules à l'aire occupée par les parois augmente, la quantité d'énergie diffractée diminue en proportion inverse. En d'autres termes, la quantité d'énergie diffractée est une fonction décroissante du facteur de remplissage $\tau = \dfrac{\rho}{(\rho+1)}$. Ainsi, en augmentant au-delà de 100 $\mu$m la dimension (D) des cellules parallèlement à la surface, on augmente le facteur de remplissage pour une même épaisseur de parois, ce qui permet de diminuer la diffraction.

Ainsi dans le cadre de l'invention, on donnera aux cellules des dimensions comprises entre 100 $\mu$m et 500 $\mu$m, parallèlement à la surface du composant. Dans un mode de réalisation particulièrement avantageux de l'invention, les cellules présentent une dimension de l'ordre de 200 $\mu$m.

Parallèlement à la surface du composant, les cellules seront de préférence séparées par des parois d'épaisseur comprise entre 0,10 $\mu$m et 5 $\mu$m. Dans un premier mode de réalisation de l'invention, les parois ont une épaisseur comprise entre 0,10 $\mu$m et 0,35 $\mu$m, de

sorte qu'elles aussi ne produisent quasiment pas d'effets diffractifs indésirables dans le spectre visible.

Dans un second mode de réalisation, les parois ont une épaisseur comprise entre 0,40 $\mu$m et 2,00 $\mu$m. Dans un troisième mode de réalisation, les parois ont une épaisseur comprise entre 2,00 $\mu$m et 3,5 $\mu$m. Le matériau - constituant les parois des cellules sera choisi de telle manière que les cellules ne seront plus discernables du matériau de remplissage desdites cellules. Par non discernable, on entend sans diffusion visible, sans diffraction visible, et sans réflexions parasites.

L'ensemble de cellules constitue avantageusement une couche d'épaisseur comprise entre 1 $\mu$m et 50 $\mu$m inclus. Dans un mode de réalisation avantageux de l'invention, l'épaisseur de cette couche est comprise entre 5 $\mu$m et 20 $\mu$m inclus.

L'ensemble de cellules peut être formé directement sur un support transparent rigide, ou au sein d'un film transparent souple reporté ensuite sur un support transparent rigide. Ledit support transparent rigide peut être convexe, concave, ou plan sur le côté recevant l'ensemble des cellules.

Dans un mode de réalisation du procédé, la substance à propriété optique contenue dans certaines au moins des cellules est sous forme de liquide ou de gel. Ladite substance peut notamment présenter au moins une des propriétés optiques choisies parmi la coloration, le photochromisme, la polarisation et l'indice de réfraction.

Elle peut notamment incorporer un colorant photochromique, ce qui permet de réaliser commodément un élément photochromique à réponse très rapide.

Pour l'application à la fabrication de lentilles correctrices, il convient que des cellules différentes du composant optique contiennent des substances d'indice de réfraction différent. L'indice de réfraction sera typiquement adapté pour varier le long de la surface du composant en fonction de l'amétropie estimée d'un oeil à corriger.

Pour l'application à la fabrication de lentilles optiques présentant une propriété optique de polarisation, les cellules du composant optique renfermeront notamment des cristaux liquides associés ou non à des colorants.

Un objet de la présente invention est également un procédé de production d'un composant optique tel que défini précédemment, qui comprend la formation sur un substrat d'un réseau de parois pour délimiter les cellules parallèlement à ladite surface du composant, un remplissage collectif ou individuel des cellules avec la substance à propriété optique sous forme de liquide ou de gel, et la fermeture des cellules sur leur côté opposé au substrat.

L'ensemble de cellules du composant optique peut inclure plusieurs groupes de cellules contenant des substances différentes. De même chaque cellule peut être remplie avec une substance présentant une ou plusieurs propriétés optiques telles que décrites précédemment. Il est également possible d'empiler plusieurs ensembles de cellules sur l'épaisseur du composant. Dans ce mode de réalisation les ensembles de cellules peuvent avoir des propriétés identiques ou différentes au sein de chaque couche, ou les cellules au sein de chaque ensemble de cellules peuvent également présenter des propriétés optiques différentes. Ainsi il est possible d'envisager d'avoir une couche dans laquelle l'ensemble de cellules contient une substance permettant d'obtenir une variation de l'indice de réfraction et une autre couche ou l'ensemble de cellules contient une substance à propriété photochromique.

Un autre aspect de l'invention se rapporte à un composant optique, utilisé dans le procédé ci-dessus selon la revendication 30. Ce composant optique comprend au moins un ensemble transparent de cellules juxtaposées parallèlement à une surface du composant. Chaque cellule a des dimensions comprises entre supérieur à 100 $\mu$m et 500 $\mu$m parallèlement à la surface du composant. Chaque cellule est hermétiquement fermée et contient une substance à propriété optique.

Un autre aspect encore de l'invention se rapporte à un verre de lunette selon la revendication 56, réalisé en découpant un tel composant optique.

D'autres particularités et avantages de la présente invention apparaîtront dans la description ci-après d'exemples de réalisation non limitatifs, en référence aux dessins annexés, dans lesquels :

- la figure 1 est une vue de face d'un composant optique selon l'invention;
- la figure 2 est une vue de face d'un élément optique obtenu à partir de ce composant optique;
- la figure 3 est une vue schématique en coupe d'un composant optique selon l'invention;
- les figures 4 et 5 sont des schémas montrant deux types de maillage utilisables pour agencer les cellules dans un composant optique selon l'invention;
- les figures 6 et 7 sont des vues schématiques en coupe montrant ce composant optique à deux étapes de sa fabrication;
- la figure 8 est une vue schématique en coupe illustrant un autre mode de fabrication d'un composant optique selon l'invention.

Le composant optique 10 représenté sur la figure 1 est une ébauche pour verre de lunettes. Un verre de lunette comprend une lentille ophtalmique. Par lentille ophtalmique, on entend les lentilles s'adaptant à une monture de lunette pour protéger l'oeil et/ou corriger la vue, ces lentilles étant choisies parmi les lentilles afocales, unifocales, bifocales, trifocales et progressives.

Si l'optique ophtalmique est un domaine d'application préféré de l'invention, on comprendra que cette invention est applicable à des éléments optiques transparents d'autres natures, comme par exemple des lentilles pour instruments d'optiques, des filtres, des lentilles de visée optique, des visières oculaires, des optiques de dispositifs d'éclairage, etc. Au sein de l'invention, on inclut dans l'optique ophtalmique les lentilles ophtalmiques, mais aussi les lentilles de contact et les implants oculaires.

La figure 2 montre un verre de lunette 11 obtenu en découpant l'ébauche 10 suivant un contour prédéfini, représenté en trait interrompu sur la figure 1. Ce contour est a priori arbitraire, dès lors qu'il s'inscrit dans l'étendue de l'ébauche. Des ébauches fabriquées en série sont ainsi utilisables pour obtenir des verres adaptables à une grande variété de montures de lunettes. Le bord du verre découpé peut sans problème être détouré, de façon classique, pour lui conférer une forme adaptée à la monture et au mode de fixation du verre sur cette monture et/ou pour des raisons esthétiques. Il est également possible d'y percer des trous 14, par exemple pour recevoir des vis servant à sa fixation sur la monture.

La forme générale de l'ébauche 10 peut être conforme aux standards de l'industrie, avec par exemple un contour circulaire de diamètre 60 mm, une face avant convexe 12 et une face arrière concave 13 (figure 3). Les outils traditionnels de découpe, de détourage et de perçage peuvent ainsi être utilisés pour obtenir le verre 11 à partir de l'ébauche 10.

Sur les figures 1 et 2, un arrachement partiel des couches superficielles fait apparaître la structure pixellisée de l'ébauche 10 et du verre 11. Cette structure consiste en un réseau de cellules ou microcuves 15 formées dans une couche 17 du composant transparent (figure 3). Sur ces figures, les dimensions de cette couche 17 et des cellules 15 ont été exagérées par rapport à celles de l'ébauche 10 et de son substrat 16 afin de faciliter la lecture du dessin.

Les dimensions latérales D des cellules 15 (parallèlement à la surface de l'ébauche 10) sont supérieures à 100 microns et peuvent aller jusqu'à 500 microns. Une dimension préférée est de 200 $\mu$m. Il en résulte que le réseau de cellules est réalisable avec des technologies bien maîtrisées dans le domaine de la microélectronique ou des dispositifs micromécaniques.

L'épaisseur h de la couche 17 incorporant le réseau de cellules 15 est de préférence comprise entre 1 microns et 50 microns inclus. Avantageusement, cette épaisseur h est comprise entre 5 $\mu$m et 20 $\mu$m inclus.

Les parois 18 séparant les cellules 15 assurent leur étanchéité mutuelle. Elles ont une épaisseur d comprise entre 0,10 $\mu$m et 5,00 $\mu$m inclus, permettant notamment d'obtenir un facteur de remplissage élevé du composant optique. Un facteur de remplissage élevé procure une bonne efficacité de la fonction optique recherchée, fournie par la substance contenue dans les cellules 15. Ce facteur de remplissage est compris entre 90 % et 99,5 % inclus, avantageusement compris entre 96% et 98,5 % inclus. Une combinaison judicieuse des paramètres de dimension latérale (D) des cellules et d'épaisseur (d) et de hauteur (h) des parois séparant les cellules, permet d'obtenir un composant optique présentant un taux de remplissage élevé, non visible en fonction de la ou des propriétés optiques des substances contenues dans lesdites cellules.

Ainsi selon un mode de réalisation préféré de l'invention, le composant optique comporte un réseau de cellules dans lequel les cellules 15 ont des dimensions D de 200 $\mu$m parallèlement à la surface du composant, les parois séparant ces cellules sont d'épaisseur d égale à 2 $\mu$m, et le réseau de cellules constitue une couche d'épaisseur h égale à 5 $\mu$m. En variante, le composant optique de l'invention comporte un réseau de cellules dans lequel les cellules 15 ont des dimensions D de 200 $\mu$m parallèlement à la surface du composant, les parois séparant les cellules sont d'épaisseur d égale à 3 $\mu$m, et le réseau de cellules constitue une couche d'épaisseur h égale à 20 $\mu$m.

Par exemple, avec des cellules agencées selon un maillage carré (figure 4) ou hexagonal (figure 5), des parois 18 d'épaisseur d = 2 $\mu$m et des pixels de D = 200 $\mu$m, 2 % seulement de la surface est absorbante ($\tau \approx 98$ %). Dans la variante mentionnée ci-dessus (d = 3 $\mu$m), le facteur de remplissage est $\tau \approx 97$ %.

Le maillage de type hexagonal, ou en nid d'abeilles, selon la figure 5 est un agencement préféré car il optimise la tenue mécanique du réseau de cellules pour un rapport d'aspect donné. Néanmoins, dans le cadre de l'invention toutes les possibilités de maillage respectant une géométrie cristalline sont envisageables. Ainsi un maillage de géométrie rectangulaire, triangulaire, ou octogonale est réalisable. Dans le cadre de l'invention, il est également possible d'avoir une combinaison de différentes formes géométriques de maillages pour former le réseau de cellules, tout en respectant les dimensions des cellules telles que définies précédemment.

La couche 17 incorporant le réseau de cellules 15 peut être recouverte par un certain nombre de couches additionnelles 19, 20 (figure 3), comme il est usuel en optique ophtalmique. Ces couches ont par exemple des fonctions de résistance aux chocs, de résistance à la rayure, de coloration, d'anti-reflet, d'anti-salissure, etc. Dans l'exemple représenté, la couche 17 incorporant le réseau de cellules est placée immédiatement au-dessus du substrat transparent 16, mais on comprendra qu'une ou plusieurs couches intermédiaires peuvent se trouver entre eux, tels que des couches présentant des fonctions de résistance aux chocs, de résistance à la rayure, de coloration.

D'autre part, il est possible que plusieurs réseaux de cellules soient présents dans l'empilement de couches formé sur le substrat. Il est ainsi possible, par exemple, que l'empilement des couches comporte notamment une couche de réseaux de cellules contenant une substance permettant de conférer à l'élément des fonctions photochromiques, une autre couche permettant de conférer à l'élément des fonctions de variations d'indice de réfraction. Ces couches de réseaux de cellules peuvent également être alternées avec des couches additionnelles telles que décrites précédemment.

Les diverses combinaisons sont possibles grâce notamment à la grande souplesse du procédé de réalisation de l'élément optique transparent. Ainsi dans le cadre de l'invention le composant optique peut comprendre un réseau de cellules dans lequel chaque cellule est remplie avec une substance présentant une ou plusieurs propriétés optiques, ou bien dans lequel l'ensemble de cellules 15 inclut plusieurs groupes de cellules contenant des substances différentes. Le composant optique peut aussi être constitué d'un empilement comportant au moins deux couches d'ensemble de cellules, chaque ensemble de cellules présentant des propriétés optiques identiques, ou chaque ensemble de cellules présentant des propriétés optiques différentes, ou les cellules au sein de chaque ensemble de cellules présentant des propriétés optiques différentes.

Le substrat transparent 16 peut être en verre ou en différents matériaux polymères couramment utilisés en optique ophtalmique. La couche 17 incorporant le réseau de cellules est de préférence située sur sa face avant convexe 12, la face arrière concave 13 restant libre pour être éventuellement remise en forme par usinage et polissage si cela est nécessaire. Cependant, dans le cas ou l'élément optique transparent est un verre correcteur, la correction d'amétropie peut être réalisée en modulant spatialement l'indice de réfraction des substances contenues dans les cellules 15, ce qui permet de s'affranchir de la retouche de la face arrière, et par conséquent de disposer d'une plus grande souplesse dans la conception et/ou la mise en oeuvre des différentes couches et revêtements dont doit être muni le verre. Le composant optique peut également être situé sur la face concave d'une lentille. Bien évidemment, le composant optique peut aussi être intégré sur un élément optique plan.

Les figures 6 et 7 illustrent une première manière de réaliser le réseau de cellules sur le substrat 16. La technique est ici similaire à celles utilisées pour fabriquer des dispositifs d'affichage électrophorétiques. De telles techniques sont décrites par exemple dans les documents WO 00/77570, WO 02/01281, US 2002/0176963, US 6 327 072 ou US 6 597 340. Le réseau de cellules est également réalisable en utilisant des procédés de fabrication, issus de la microélectronique, bien connu par l'homme du métier. On peut citer à titre illustratif et non limitatif, les procédés tels que l'impression à chaud, l'embossage à chaud, la photolitographie (hard, soft, positive, négative), la microdéposition telle que l'impression par micro-contact, la sérigraphie, ou encore l'impression par jet d'encre.

Dans l'exemple considéré, on dépose d'abord sur le substrat 16 un film d'une solution de monomères polymérisable sous l'action d'un rayonnement, par exemple ultraviolet. Ce film est soumis à un rayonnement ultraviolet à travers un masque qui occulte des carrés ou hexagones répartis en réseau et correspondant aux positions des microcuves 15. La polymérisation sélective laisse en place les parois 18 dressées au-dessus d'une couche de support 21. La solution de monomères est alors évacuée et le composant est dans l'état représenté sur la figure 6.

Pour obtenir une structure analogue, une autre possibilité est de recourir à une technique de photolithographie. On commence par déposer sur le substrat 16 une couche de matériau, par exemple polymère, sur une épaisseur de l'ordre de la hauteur visée pour les parois 18, par exemple 20 μm. On dépose ensuite sur cette couche un film de photorésist qu'on expose à travers un masque selon un motif en grille. Les zones non exposées sont éliminées au développement du photorésist pour laisser un masque aligné sur les positions des parois, à travers lequel la couche de matériau est soumise à une gravure anisotrope. Cette gravure, qui forme les microcuves 15, est poursuivie jusqu'à la profondeur désirée, après quoi le masque est éliminé par attaque chimique.

A partir de l'état représenté sur la figure 6, les microcuves 15 sont remplies avec la substance à propriété optique, à l'état de liquide ou de gel. Un traitement préalable de la face avant du composant peut éventuellement être appliqué pour faciliter le mouillage en surface du matériau des parois et du fond des microcuves. La solution ou suspension formant la substance à propriété optique peut être la même pour toutes les microcuves du réseau, auquel cas elle peut être introduite simplement par immersion du composant dans un bain approprié, par un procédé de type sérigraphique, par un procédé de revêtement par centrifugation (spin process), par un procédé d'étalement de la substance à l'aide d'un rouleau ou d'une raclette, ou encore par un procédé de spray. Il est également possible de l'injecter localement dans les microcuves individuelles à l'aide d'une tête de projection d'encre.

Cette dernière méthode sera typiquement retenue lorsque la substance à propriété optique est différenciée d'une microcuve à une autre, plusieurs têtes de projection étant déplacées le long de la surface pour remplir successivement les microcuves.

Cependant, dans le cas notamment où les microcuves sont formées par gravure sélective, une autre possibilité est de creuser d'abord un groupe de microcuves, de les remplir collectivement avec une première substance puis de les obturer, le reste de la surface du composant restant masqué pendant ces opérations. On réitère ensuite la gravure sélective à travers un masque de résist recouvrant au moins les zones de microcuves déjà remplies en plus des zones de paroi, et on procède à un remplissage des nouvelles microcuves avec une substance différente puis à leur obturation. Ce processus peut être répété une ou plusieurs fois si on souhaite distribuer des substances différenciées le long de la surface du composant.

Pour fermer hermétiquement un ensemble de microcuves remplies, ou applique par exemple un film plastique collé, soudé thermiquement ou laminé à chaud sur le haut des parois 18. On peut aussi déposer sur la zone à obturer un matériau polymérisable en solution, non miscible avec la substance à propriété optique contenue dans les microcuves, puis faire polymériser ce matériau, par exemple à chaud ou sous irradiation.

Une fois que le réseau de microcuves 15 a été complété (figure 5), le composant peut recevoir les couches ou revêtements supplémentaires 19, 20 pour terminer sa fabrication. Des composants de ce type sont fabriqués en série puis stockés pour être plus tard repris et découpés individuellement conformément aux besoins d'un client.

Si la substance à propriété optique n'est pas destinée à rester à l'état de liquide ou de gel, on peut lui appliquer un traitement de solidification, par exemple une séquence de chauffage et/ou d'irradiation, à un stade approprié à partir du moment où la substance a été déposée.

Dans une variante représentée sur la figure 8, le composant optique constitué d'un réseau de microcuves 25 est construit sous la forme d'un film transparent souple 27. Un tel film 27 est réalisable par des techniques analogues à celles décrites précédemment. Dans ce cas le film 27 est réalisable sur un support plan et non convexe ou concave.

Le film 27 est par exemple fabriqué industriellement sur une étendue relativement grande, pour faire des économies sur l'exécution groupée des étapes du procédés, puis découpé aux dimensions appropriées pour être reporté sur le substrat 16 d'une ébauche. Ce report peut être effectué par collage du film souple, par thermoformage du film, voire par un phénomène physique d'adhérence sous vide. Le film 27 peut ensuite recevoir divers revêtements, comme dans le cas précédent, ou bien être reporté sur le substrat 16 lui-même revêtu d'une ou plusieurs couches additionnelles telles que décrites précédemment.

Dans un domaine d'application de l'invention, la propriété optique de la substance introduite dans les microcuves 15 se rapporte à son indice de réfraction. On module l'indice de réfraction de la substance le long de la surface du composant pour obtenir une lentille correctrice. Dans une première variante de l'invention, la modulation peut être réalisée en introduisant des substances d'indices différents lors de la fabrication du réseau de microcuves 15.

Dans une autre variante de l'invention, la modulation peut être réalisée en introduisant dans les microcuves 15 une substance dont l'indice de réfraction peut être réglé ultérieurement sous irradiation. L'inscription de la fonction optique correctrice est alors effectuée en exposant l'ébauche 10 ou le verre 11 à de la lumière dont l'énergie varie le long de la surface pour obtenir le profil d'indice souhaité afin de corriger la vision d'un patient. Cette lumière est typiquement celle produite par un laser, l'équipement d'écriture étant semblable à celui utilisé pour graver des CDROM ou autres supports optiques de mémoire. L'exposition plus ou moins grande de la substance photosensible peut résulter d'une modulation de la puissance du laser et/ou du choix du temps d'exposition.

Parmi les substances utilisables dans cette application, on peut citer, par exemple, les matériaux mésoporeux ou les cristaux liquides. Ces cristaux liquides peuvent être figés par une réaction de polymérisation, par exemple induite par irradiation. On peut ainsi les figer dans un état choisi pour introduire un retard optique déterminé dans les ondes lumineuses qui les traversent. Dans le cas d'un matériau mésoporeux le contrôle de l'indice de réfraction du matériau se fait au travers de la variation de sa porosité. Une autre possibilité est d'utiliser des photopolymères dont une propriété bien connue est de changer d'indice de réfraction au cours de la réaction de polymérisation induite par irradiation. Ces changements d'indice sont dus à une modification de la densité du matériau et à un changement de la structure chimique. On utilisera de préférence des photopolymères qui ne subissent qu'une très faible variation de volume lors de la réaction de polymérisation.

La polymérisation sélective de la solution ou suspension est réalisée en présence d'un rayonnement différencié spatialement par rapport à la surface du composant, afin d'obtenir la modulation d'indice souhaitée. Cette modulation est déterminée préalablement en fonction de l'amétropie estimée de l'oeil d'un patient à corriger.

Dans une autre application de l'invention, la substance introduite sous forme de liquide ou de gel dans les microcuves a une propriété photochromique. Parmi les substances utilisés dans cette application on peut citer à titre d'exemples les composés photocromique contenant un motif central tel qu'un noyau spirooxazine, spiro-indoline[2,3']benzoxazine, chromène, spiroxazine homoazaadamantane, spirofluorène-(2$H$)-benzopyrane, naphto[2,1-$b$]pyrane tels que décrit notamment dans les demandes de brevet et brevets FR 2763070, EP 0676401, EP 0489655, EP 0653428, EP 0407237, FR 2718447, US 6,281,366 ou EP 1204714.

Dans le cadre de l'invention la substance à propriété optique peut être un colorant, ou un pigment apte à apporter une modification du taux de transmission.

**Revendications**

1. Procédé de réalisation d'un élément optique transparent (11) choisi parmi les lentilles ophtalmiques, les lentilles de contact, les implants oculaires, les lentilles pour instruments d'optique, et les lentilles de visée optique, ledit procédé comprenant les étapes suivantes:

   - produire un composant optique (10) ayant au moins un ensemble transparent de cellules (15; 25) juxtaposées parallèlement à une surface du composant, chaque cellule étant délimitée par des parois et ayant des dimensions comprises entre 100 $\mu$m et 500 $\mu$m parallèlement à la surface du composant, chaque cellule étant hermétiquement fermée et contenant une substance à propriété optique; et

- découper le composant optique le long d'un contour défini sur ladite surface, correspondant à une forme déterminée pour l'élément optique.

2. Procédé selon la revendication 1, comprenant en outre une étape de perçage à travers le composant optique (10), pour la fixation de l'élément optique (11) sur un support de maintien.

3. Procédé selon la revendication 1 ou 2, dans lequel la production du composant optique (10) comprend la formation de l'ensemble de cellules (15) sur un support transparent rigide (16).

4. Procédé selon la revendication 3, dans lequel la production du composant optique (10) comprend la formation de l'ensemble de cellules (25) au sein d'un film transparent souple (27) puis le report dudit film sur un support transparent rigide (16).

5. Procédé selon la revendication 3 ou 4, dans lequel le support transparent rigide (16) est convexe sur le côté recevant l'ensemble de cellules (15; 25).

6. Procédé selon la revendication 3 ou 4, dans lequel le support transparent rigide (16) est concave sur le côté recevant l'ensemble de cellules (15; 25).

7. Procédé selon la revendication 3 ou 4, dans lequel le support transparent rigide (16) est plan sur le côté recevant l'ensemble de cellules (15; 25).

8. Procédé selon l'une quelconque des revendications précédentes, dans lequel la substance à propriété optique contenue dans l'ensemble des cellules (15; 25) est sous forme de liquide.

9. Procédé selon l'une quelconque des revendications précédentes, dans lequel la substance à propriété optique contenue dans l'ensemble des cellules (15; 25) est sous forme de gel.

10. Procédé selon la revendication 8 ou 9, dans lequel la production du composant optique (10) comprend la formation sur un substrat d'un réseau de parois (18) pour délimiter les cellules (15) parallèlement à ladite surface du composant, un remplissage collectif ou individuel des cellules avec la substance à propriété optique sous forme de liquide ou de gel, et la fermeture des cellules sur leur côté opposé au substrat.

11. Procédé selon l'une quelconque des revendications 8 à 10, dans lequel la propriété optique est choisie parmi une propriété de coloration, de photochromisme, de polarisation, d'indice de réfraction.

12. Procédé selon la revendication 11, dans lequel la propriété optique est une propriété de photochromisme.

13. Procédé selon l'une quelconque des revendications précédentes, dans lequel l'ensemble de cellules (15; 25) inclut plusieurs groupes de cellules contenant des substances différentes.

14. Procédé selon l'une quelconque des revendications précédentes, dans lequel plusieurs ensembles de cellules sont empilés sur l'épaisseur du composant.

15. Procédé selon la revendication 14, dans lequel l'empilement comporte aux moins deux ensembles de cellules empilés, chaque ensemble de cellules présentant des propriétés optiques identiques, ou chaque ensemble de cellules présentant des propriétés optiques différentes, ou les cellules au sein de chaque ensemble de cellules présentent des propriétés optiques différentes.

16. Procédé selon l'une quelconque des revendications précédentes, dans lequel la production du composant optique (10) comprend la formation sur un substrat (16) d'un réseau de parois (18) pour délimiter les cellules (18) parallèlement à ladite surface du composant, un remplissage des cellules avec la ou les substances à propriété optique, et le scellement des cellules sur leur côté opposé au substrat.

17. Procédé selon l'une quelconque des revendications précédentes, dans lequel l'ensemble de cellules présente un facteur de remplissage compris entre 90 % et 99,5 % inclus parallèlement à ladite surface du composant.

18. Procédé selon la revendication 17, dans lequel le facteur de remplissage est compris entre 96 % et 98,5 % inclus.

19. Procédé selon l'une quelconque des revendications précédentes, dans lequel la dimension des cellules parallèlement à la surface du composant est de l'ordre de 200 $\mu$m.

20. Procédé selon l'une quelconque des revendications précédentes, dans lequel les cellules (15; 25) sont séparées par des parois (18) d'épaisseur comprise entre 0,10 $\mu$m et 5 $\mu$m, parallèlement à la surface du composant.

21. Procédé selon la revendication 20, dans lequel les parois (18) ont une épaisseur comprise entre 0,10 $\mu$m et 0,35 $\mu$m.

22. Procédé selon la revendication 20, dans lequel les parois (18) ont une épaisseur comprise entre 0,40

μm et 2,00 μm.

23. Procédé selon la revendication 22, dans lequel les parois (18) ont une épaisseur comprise entre 2,00 μm et 3,5 μm inclus.

24. Procédé selon l'une quelconque des revendications précédentes dans lequel l'ensemble de cellules (15, 25) constitue une couche d'épaisseur comprise entre 1 μm et 50 μm inclus.

25. Procédé selon la revendication 24, dans lequel le réseau de cellules (15, 25) constitue une couche d'épaisseur comprise entre 5 μm et 20 μm inclus.

26. Procédé selon l'une quelconque des revendications 1 à 18, dans lequel les cellules (15, 25) ont des dimensions parallèlement à la surface du composant de l'ordre de 200 μm et sont mutuellement séparées par des parois (18) d'épaisseur de l'ordre de 2 μm, l'ensemble de cellules constituant une couche d'épaisseur 5 μm.

27. Procédé selon l'une quelconque des revendications 1 à 18, dans lequel les cellules (15, 25) ont des dimensions parallèlement à la surface du composant de l'ordre de 200 μm et sont mutuellement séparées par des parois (18) d'épaisseur de l'ordre de 3 μm, l'ensemble de cellules constituant une couche d'épaisseur 20 μm.

28. Procédé selon l'une quelconque des revendications précédentes, dans lequel les cellules (15; 25) de l'ensemble sont agencées selon un maillage respectant une géométrie cristalline choisie parmi une géométrie carrée, triangulaire, rectangulaire, octogonale, hexagonale, et une combinaison de plusieurs desdites géométries.

29. Procédé selon la revendication 28, dans lequel les cellules (15; 25) de l'ensemble sont agencées selon un maillage de type hexagonal.

30. Composant optique adapté pour la fabrication d'un élément optique transparent choisi parmi les lentilles ophtalmiques, les lentilles de contact, les implants oculaires, les lentilles pour instruments d'optique, et les lentilles de visée optique, ledit composant comprenant au moins un ensemble transparent de cellules (15; 25) juxtaposées parallèlement à une surface du composant, chaque cellule étant délimitée par des parois et ayant des dimensions comprises entre 100 μm et 500 μm parallèlement à la surface du composant, chaque cellule étant hermétiquement fermée et contenant une substance à propriété optique.

31. Composant optique selon la revendication 30, comprenant un support transparent rigide (16) sur lequel est formé l'ensemble de cellules (15).

32. Composant optique selon la revendication 30, comprenant un support transparent rigide (16) sur lequel est reporté un film transparent (27) incorporant l'ensemble de cellules (25).

33. Composant optique selon la revendication 31 ou 32, dans lequel le support transparent rigide (16) est convexe sur le côté présentant l'ensemble de cellules.

34. Composant optique selon la revendication 31 ou 32, dans lequel le support transparent rigide (16) est concave sur le côté présentant l'ensemble de cellules.

35. Composant optique selon la revendication 31 ou 32, dans lequel le support transparent rigide (16) est plan sur le côté présentant l'ensemble de cellules.

36. Composant optique selon l'une quelconque des revendications 30 à 35, dans lequel la substance à propriété optique contenue dans certaines au moins des cellules (15; 25) est sous forme de liquide.

37. Composant optique selon l'une quelconque des revendications 30 à 35, dans lequel la substance à propriété optique contenue dans certaines au moins des cellules (15; 25) est sous forme de gel.

38. Composant optique selon l'une quelconque des revendications 30 à 37, dans lequel la propriété optique est choisie parmi une propriété de coloration, de photochromisme, de polarisation, d'indice de réfraction.

39. Composant optique selon la revendication 38, dans lequel la propriété optique est une propriété de photochromisme.

40. Composant optique selon l'une quelconque des revendications 30 à 39, dans lequel l'ensemble de cellules (15; 25) inclut plusieurs groupes de cellules contenant des substances différentes.

41. Composant optique selon l'une quelconque des revendications 30 à 40, dans lequel plusieurs ensembles de cellules sont empilés sur l'épaisseur dudit composant.

42. Composant optique selon la revendication 41, dans lequel l'empilement comporte aux moins deux ensembles de cellules empilés, chaque ensemble de cellules présentant des propriétés optiques identiques, ou chaque ensemble de cellules présentant des propriétés optiques différentes, ou les cellules au sein de chaque ensemble de cellules présentent des propriétés optiques différentes.

**43.** Composant optique selon l'une quelconque des revendications 30 à 42, dans lequel l'ensemble de cellules présente un facteur de remplissage compris entre 90 % et 99,5 % inclus parallèlement à ladite surface du composant.

**44.** Composant optique selon la revendication 43, dans lequel le facteur de remplissage est compris entre 96 % et 98,5 % inclus.

**45.** Composant optique selon l'une quelconque des revendications 30 à 44, dans lequel la dimension des cellules parallèlement à la surface du composant est de l'ordre de 200 $\mu$m.

**46.** Composant optique selon l'une quelconque des revendications 30 à 45, dans lequel les cellules (15; 25) sont séparées par des parois (18) d'épaisseur comprise entre 0,10 $\mu$m et 5 $\mu$m, parallèlement à la surface du composant.

**47.** Composant optique selon la revendication 46, dans lequel les parois (18) ont une épaisseur comprise entre 0,10 $\mu$m et 0,35 $\mu$m.

**48.** Composant optique selon la revendication 46, dans lequel les parois (18) ont une épaisseur comprise entre 0,40 $\mu$m et 2,00 $\mu$m.

**49.** Composant optique selon la revendication 46, dans lequel les parois (18) ont une épaisseur comprise entre 2,00 $\mu$m et 3,5 $\mu$m.

**50.** Composant optique selon l'une quelconque des revendications 30 à 49, dans lequel l'ensemble de cellules (15, 25) constitue une couche d'épaisseur comprise entre 1 $\mu$m et 50 $\mu$m inclus.

**51.** Composant optique selon la revendication 50, dans lequel le réseau de cellules (15, 25) constitue une couche d'épaisseur comprise entre 5 $\mu$m et 20 $\mu$m inclus.

**52.** Composant optique selon l'une quelconque des revendications 30 à 44, dans lequel les cellules (15, 25) ont des dimensions parallèlement à la surface du composant de l'ordre de 200 $\mu$m et sont mutuellement séparées par des parois (18) d'épaisseur de l'ordre de 2 $\mu$m, l'ensemble de cellules constituant une couche d'épaisseur 5 $\mu$m.

**53.** Composant optique selon l'une quelconque des revendications 30 à 44, dans lequel les cellules (15, 25) ont des dimensions parallèlement à la surface du composant de l'ordre de 200 $\mu$m et sont mutuellement séparées par des parois (18) d'épaisseur de l'ordre de 3 $\mu$m, l'ensemble de cellules constituant une couche d'épaisseur 20 $\mu$m.

**54.** Composant optique selon l'une quelconque des revendications 30 à 53, dans lequel les cellules (15; 25) de l'ensemble sont agencées selon un maillage respectant une géométrie cristalline choisie parmi une géométrie carrée, triangulaire, rectangulaire, octogonale, hexagonale, et une combinaison de plusieurs desdites géométries.

**55.** Composant optique selon la revendication 54, dans lequel les cellules (15; 25) de l'ensemble sont agencées selon un maillage de type hexagonal.

**56.** Verre de lunettes, réalisé en découpant un composant optique (10) selon l'une quelconque des revendications 30 à 55.

**57.** Verre de lunettes selon la revendication 56, dans lequel au moins un perçage est réalisé à travers le composant (10) pour la fixation du verre (11) sur une monture.

**58.** Verre de lunettes selon l'une des revendications 56 et 57, dans lequel la substance contenue dans les cellules (15, 25) est une substance photochromique.

**Patentansprüche**

**1.** Verfahren zur Herstellung eines transparenten optischen Elements (11), das ausgewählt ist aus den ophthalmischen Linsen, den Kontaktlinsen, den Augen-Implantaten, den Linsen für optische Instrumente und den optischen Visier-Linsen, wobei das Verfahren die folgenden Schritte umfasst:

- Herstellen eines optischen Bauteils (10), das wenigstens eine transparente Anordnung von Zellen (15; 25) aufweist, die nebeneinander parallel zu einer Oberfläche des Bauteils angeordnet sind, wobei jede Zelle durch Wände begrenzt ist und Abmessungen zwischen 100 $\mu$m und 500 $\mu$m parallel zu der Oberfläche des Bauteils aufweist, wobei jede Zelle hermetisch geschlossen ist und eine Substanz mit einer optischen Eigenschaft enthält, und
- Ausschneiden des optischen Bauteils entlang einer auf der Oberfläche definierten Kontur, entsprechend einer für das optische Element bestimmten Form.

**2.** Verfahren nach Anspruch 1, umfassend weiterhin einen Schritt des Bohrens durch das optische Bauteil (10) hindurch, für die Befestigung des optischen Elements (11) an einer Halterung.

**3.** Verfahren nach Anspruch 1 oder 2, wobei die Herstellung des optischen Bauteils (10) die Bildung der Anordnung von Zellen (15) auf einem starren transparenten Träger (16) umfasst.

**4.** Verfahren nach Anspruch 3, wobei die Herstellung des optischen Bauteils (10) die Bildung der Anordnung von Zellen (25) inmitten einer flexiblen transparenten Folie (27) umfasst, und dann das Übertragen der Folie auf einen starren transparenten Träger (16).

**5.** Verfahren nach Anspruch 3 oder 4, wobei der starre transparente Träger (16) auf der Seite konvex ist, welche die Anordnung von Zellen (15; 25) aufnimmt.

**6.** Verfahren nach Anspruch 3 oder 4, wobei der starre transparente Träger (16) auf der Seite konkav ist, welche die Anordnung von Zellen (15; 25) aufnimmt.

**7.** Verfahren nach Anspruch 3 oder 4, wobei der starre transparente Träger (16) auf der Seite plan ist, welche die Anordnung von Zellen (15; 25) aufnimmt.

**8.** Verfahren nach einem der vorhergehenden Ansprüche, wobei die Substanz mit optischer Eigenschaft, die in der Anordnung von Zellen (15; 25) enthalten ist, in flüssiger Form vorliegt.

**9.** Verfahren nach einem der vorhergehenden Ansprüche, wobei die Substanz mit optischer Eigenschaft, die in der Anordnung von Zellen (15; 25) enthalten ist, in Gel-Form vorliegt.

**10.** Verfahren nach Anspruch 8 oder 9, wobei die Herstellung des optischen Bauteils (10) die Bildung von einem Netz aus Wänden (18) auf einem Substrat umfasst, um die Zellen (15) parallel zu der Oberfläche des Bauteils zu begrenzen, ein gemeinsames oder einzelnes Füllen der Zellen mit der Substanz mit optischer Eigenschaft in Form von Flüssigkeit oder von Gel umfasst, und das Verschließen der Zellen auf deren Seite umfasst, die dem Substrat gegenüber liegt.

**11.** Verfahren nach einem der Ansprüche 8 bis 10, wobei die optische Eigenschaft ausgewählt ist aus einer Eigenschaft der Färbung, der Photochromie, der Polarisation und des Brechungsindex.

**12.** Verfahren nach Anspruch 11, wobei die optische Eigenschaft eine Photochromie-Eigenschaft ist.

**13.** Verfahren nach einem der vorhergehenden Ansprüche, wobei die Anordnung von Zellen (15; 25) mehrere Gruppen von Zellen umfasst, die unterschiedliche Substanzen enthalten.

**14.** Verfahren nach einem der vorhergehenden Ansprüche, wobei mehrere Anordnungen von Zellen über die Dicke des Bauteils gestapelt sind.

**15.** Verfahren nach Anspruch 14, wobei der Stapel wenigstens zwei gestapelte Anordnungen von Zellen umfasst, wobei jede Anordnung von Zellen identische optische Eigenschaften aufweist oder jede Anordnung von Zellen unterschiedliche optische Eigenschaften aufweist, oder die Zellen in der Mitte von jeder Anordnung von Zellen unterschiedliche optische Eigenschaften aufweisen.

**16.** Verfahren nach einem der vorhergehenden Ansprüche, wobei die Herstellung des optischen Bauteils (10) die Bildung von einem Netz aus Wänden (18) auf einem Substrat (16) umfasst, um die Zellen (18) parallel zu der Oberfläche des Bauteils zu begrenzen, ein Füllen der Zellen mit der Substanz oder den Substanzen mit optischer Eigenschaft umfasst, und die Versiegelung der Zellen auf deren Seite umfasst, die dem Substrat gegenüber liegt.

**17.** Verfahren nach einem der vorhergehenden Ansprüche, wobei die Anordnung von Zellen einen Befüllungsfaktor aufweist, der zwischen 90 % und 99,5 % einschließlich liegt, parallel zu der Oberfläche des Bauteils.

**18.** Verfahren nach Anspruch 17, wobei der Befüllungsfaktor zwischen 96 % und 98,5 % einschließlich liegt.

**19.** Verfahren nach einem der vorhergehenden Ansprüche, wobei die Abmessung der Zellen parallel zu der Oberfläche des Bauteils in der Größenordnung von 200 $\mu$m liegt.

**20.** Verfahren nach einem der vorhergehenden Ansprüche, wobei die Zellen (15; 25) von Wänden (18) getrennt sind, mit einer Dicke zwischen 0,10 $\mu$m und 5 $\mu$m, parallel zu der Oberfläche des Bauteils.

**21.** Verfahren nach Anspruch 20, wobei die Wände (18) eine Dicke zwischen 0,10 $\mu$m und 0,35 $\mu$m aufweisen.

**22.** Verfahren nach Anspruch 20, wobei die Wände (18) eine Dicke zwischen 0,40 $\mu$m und 2,00 $\mu$m aufweisen.

**23.** Verfahren nach Anspruch 22, wobei die Wände (18) eine Dicke zwischen 2,00 $\mu$m und 3,5 $\mu$m einschließlich aufweisen.

**24.** Verfahren nach einem der vorhergehenden Ansprüche, wobei die Anordnung von Zellen (15, 25) eine Schicht mit einer Dicke zwischen 1 $\mu$m und 50 $\mu$m einschließlich bildet.

**25.** Verfahren nach Anspruch 24, wobei das Netz aus Zellen (15, 25) eine Schicht mit einer Dicke zwischen 5 μm und 20 μm einschließlich bildet.

**26.** Verfahren nach einem der Ansprüche 1 bis 18, wobei die Zellen (15, 25) Abmessungen parallel zu der Oberfläche des Bauteils in der Größenordnung von 200 μm aufweisen und voneinander durch Wände (18) mit einer Dicke in der Größenordnung von 2 μm getrennt sind, wobei die Anordnung von Zellen eine Schicht mit einer Dicke von 5 μm bildet.

**27.** Verfahren nach einem der Ansprüche 1 bis 18, wobei die Zellen (15, 25) Abmessungen parallel zu der Oberfläche des Bauteils in der Größenordnung von 200 μm aufweisen und voneinander durch Wände (18) mit einer Dicke in der Größenordnung von 3 μm getrennt sind, wobei die Anordnung von Zellen eine Schicht mit einer Dicke von 20 μm bildet.

**28.** Verfahren nach einem der vorhergehenden Ansprüche, wobei die Zellen (15; 25) der Anordnung in einem Netz-Muster angeordnet sind, welches eine Kristall-Geometrie respektiert, die ausgewählt ist aus einer viereckigen, dreieckigen, rechteckigen, oktagonalen, hexagonalen Geometrie und einer Kombination aus mehreren dieser Geometrie.

**29.** Verfahren nach Anspruch 28, wobei die Zellen (15; 25) der Anordnung in einem Netz-Muster vom hexagonalen Typ angeordnet sind.

**30.** Optisches Bauteil, welches für die Herstellung eines transparenten optischen Elements angepasst ist, ausgewählt aus den ophthalmischen Linsen, den Kontaktlinsen, den Augen-Implantaten, den Linsen für optische Instrumente und den optischen Visier-Linsen, wobei das Bauteil wenigstens eine transparente Anordnung aus Zellen (15; 25) umfasst, die parallel zu einer Oberfläche des Bauteils nebeneinander angeordnet sind, wobei jede Zelle durch Wände begrenzt ist und Abmessungen zwischen 100 μm und 500 μm parallel zu der Oberfläche des Bauteils aufweist, wobei jede Zelle hermetisch geschlossen ist und eine Substanz mit optischer Eigenschaft enthält.

**31.** Optisches Bauteil nach Anspruch 30, umfassend einen starren transparenten Träger (16), auf welchem die Anordnung von Zellen (15) gebildet ist.

**32.** Optisches Bauteil nach Anspruch 30, umfassend einen starren transparenten Träger (16), auf welchen eine transparente Folie (27) übertragen wurde, welche die Anordnung von Zellen (25) enthält.

**33.** Optisches Bauteil nach Anspruch 31 oder 32, wobei der starre transparente Träger (16) auf der Seite konvex ist, welche die Anordnung von Zellen aufweist.

**34.** Optisches Bauteil nach Anspruch 31 oder 32, wobei der starre transparente Träger (16) auf der Seite konkav ist, welche die Anordnung von Zellen aufweist.

**35.** Optisches Bauteil nach Anspruch 31 oder 32, wobei der starre transparente Träger (16) auf der Seite plan ist, welche die Anordnung von Zellen aufweist.

**36.** Optisches Bauteil nach einem der Ansprüche 30 bis 35, wobei die Substanz mit optischer Eigenschaft, die in wenigstens einigen der Zellen (15; 25) enthalten ist, in flüssiger Form vorliegt.

**37.** Optisches Bauteil nach einem der Ansprüche 30 bis 35, wobei die Substanz mit optischer Eigenschaft, die in wenigstens einigen der Zellen (15; 25) enthalten ist, in Gel-Form vorliegt.

**38.** Optisches Bauteil nach einem der Ansprüche 30 bis 37, in welchem die optische Eigenschaft ausgewählt ist aus einer Eigenschaft der Färbung, der Photochromie, der Polarisation und des Brechungsindex.

**39.** Optisches Bauteil nach Anspruch 38, wobei die optische Eigenschaft eine Eigenschaft der Photochromie ist.

**40.** Optisches Bauteil nach einem der Ansprüche 30 bis 39, wobei die Anordnung von Zellen (15; 25) mehrere Gruppen von Zellen umfasst, welche unterschiedliche Substanzen enthalten.

**41.** Optisches Bauteil nach einem der Ansprüche 30 bis 40, wobei mehrere Anordnungen von Zellen über die Dicke des Bauteils gestapelt sind.

**42.** Optisches Bauteil nach Anspruch 41, wobei jeder Stapel wenigstens zwei gestapelte Anordnungen von Zellen umfasst, wobei jede Anordnung von Zellen identische optische Eigenschaften aufweist oder jede Anordnung von Zellen unterschiedliche optische Eigenschaften aufweist oder die Zellen inmitten von jeder Anordnung von Zellen unterschiedliche optische Eigenschaften aufweisen.

**43.** Optisches Bauteil nach einem der Ansprüche 30 bis 42, wobei die Anordnung von Zellen einen Befüllungsfaktor aufweist, der zwischen 90 % und 99,5 % einschließlich liegt, parallel zu der Oberfläche des Bauteils.

**44.** Optisches Bauteil nach Anspruch 43, wobei der Befüllungsfaktor zwischen 96 % und 98,5 % einschließlich liegt.

**45.** Optisches Bauteil nach einem der Ansprüche 30 bis 44, wobei die Abmessung der Zellen parallel zu der Oberfläche des Bauteils in der Größenordnung von 200 $\mu$m liegt.

**46.** Optisches Bauteil nach einem der Ansprüche 30 bis 45, wobei die Zellen (15; 25) durch Wände (18) getrennt sind, mit einer Dicke von zwischen 0,10 $\mu$m und 5 $\mu$m parallel zu der Oberfläche des Bauteils.

**47.** Optisches Bauteil nach Anspruch 46, wobei die Wände (18) eine Dicke zwischen 0,10 $\mu$m und 0,35 $\mu$m aufweisen.

**48.** Optisches Bauteil nach Anspruch 46, wobei die Wände (18) eine Dicke zwischen 0,40 $\mu$m und 2,00 $\mu$m aufweisen.

**49.** Optisches Bauteil nach Anspruch 46, wobei die Wände (18) eine Dicke zwischen 2,00 $\mu$m und 3,5 $\mu$m aufweisen.

**50.** Optisches Bauteil nach einem der Ansprüche 30 bis 49, wobei die Anordnung von Zellen (15, 25) eine Schicht mit einer Dicke zwischen 1 $\mu$m und 50 $\mu$m einschließlich bildet.

**51.** Optisches Bauteil nach Anspruch 50, wobei das Netz von Zellen (15, 25) eine Schicht mit einer Dicke zwischen 5 $\mu$m und 20 $\mu$m einschließlich bildet.

**52.** Optisches Bauteil nach einem der Ansprüche 30 bis 44, wobei die Zellen (15, 25) Abmessungen parallel zu der Oberfläche des Bauteils in der Größenordnung von 200 $\mu$m aufweisen und voneinander durch Wände (18) mit einer Dicke in der Größenordnung von 2 $\mu$m getrennt sind, wobei die Anordnung von Zellen eine Schicht mit einer Dicke von 5 $\mu$m bildet.

**53.** Optisches Bauteil nach einem der Ansprüche 30 bis 44, wobei die Zellen (15, 25) Abmessungen parallel zu der Oberfläche des Bauteils in der Größenordnung von 200 $\mu$m aufweisen und voneinander durch Wände (18) mit einer Dicke in der Größenordnung von 3 $\mu$m getrennt sind, wobei die Anordnung von Zellen eine Schicht mit einer Dicke von 20 $\mu$m bildet.

**54.** Optisches Bauteil nach einem der Ansprüche 30 bis 53, wobei die Zellen (15; 25) der Anordnung gemäß einem Netz-Muster angeordnet sind, welches eine Kristall-Geometrie respektiert, ausgewählt aus einer viereckigen, dreieckigen, rechteckigen, oktagonalen, hexagonalen Geometrie und einer Kombination von mehreren dieser Geometrien.

**55.** Optisches Bauteil nach Anspruch 54, wobei die Zellen (15; 25) der Anordnung gemäß einem Netz-Muster vom hexagonalen Typ angeordnet sind.

**56.** Brillenglas, hergestellt durch Ausschneiden eines optischen Bauteils (10) gemäß einem der Ansprüche 30 bis 55.

**57.** Brillenglas nach Anspruch 56, wobei wenigstens eine Bohrung durch das Bauteil (10) ausgeführt ist, um das Glas (11) an einem Gestell zu fixieren.

**58.** Brillenglas nach einem der Ansprüche 56 und 57, wobei die in den Zellen (15, 25) enthaltene Substanz einer photochromische Substanz ist.

**Claims**

**1.** A process for producing a transparent optical element (11) selected from ophthalmic lenses, contact lenses, ocular implants, lenses for optical instruments, and optical sight lenses, said process comprising the following steps:

     - producing an optical component (10) having at least one transparent array of cells (15; 25) that are juxtaposed parallel to one surface of the component, each cell being bounded with walls and having dimensions between 100 $\mu$m and 500 $\mu$m parallel to the surface of the component, each cell being hermetically sealed and containing a substance having an optical property; and
     - cutting the optical component along a defined contour on said surface, corresponding to a predetermined shape of the optical element.

**2.** The process as claimed in claim 1, which furthermore includes a step of drilling through the optical component (10) in order to fasten the optical element (11) to a holding support.

**3.** The process as claimed in either of claims 1 and 2, in which the production of the optical component (10) comprises the formation of the array of cells (15) on a rigid transparent substrate (16).

**4.** The process as claimed in claim 3, in which the production of the optical component (10) comprises the formation of the array of cells (25) within a flexible transparent film (27) followed by the transfer of said film onto a rigid transparent substrate (16).

**5.** The process as claimed in claim 3 or 4, in which the rigid transparent substrate (16) is convex on that side which receives the array of cells (15; 25).

**6.** The process as claimed in claim 3 or 4, in which the rigid transparent substrate (16) is concave on that side which receives the array of cells (15; 25).

**7.** The process as claimed in claim 3 or 4, in which the rigid transparent substrate (16) is planar on that side which receives the array of cells (15; 25).

8. The process as claimed in any one of the preceding claims, in which the substance having an optical property contained in the array of cells (15; 25) is in liquid form.

9. The process as claimed in any one of the preceding claims, in which the substance having an optical property contained in the array of cells (15; 25) is in gel form.

10. The process as claimed in claim 8 or 9, in which the production of the optical component (10) comprises the formation, on a substrate, of a network of walls (18) for bounding the cells (15) parallel to said surface of the component, a collective or individual filling of the cells with the substance having an optical property in the form of a liquid or gel, and the closing of the cells on their side opposite from the substrate.

11. The process as claimed in any one of claims 8 to 10, in which the optical property is chosen from a coloration, photochromism, polarization or refractive-index property.

12. The process as claimed in claim 11, in which the optical property is a photochromism property.

13. The process as claimed in any one of the preceding claims, in which the array of cells (15; 25) includes several groups of cells containing different substances.

14. The process as claimed in any one of the preceding claims, in which several arrays of cells are stacked over the thickness of the component.

15. The process as claimed in claim 14, in which the stack comprises at least two stacked arrays of cells, each array of cells having identical optical properties, or each array of cells having different optical properties, or the cells within each array of cells having different optical properties.

16. The process as claimed in any one of the preceding claims, in which the production of the optical component (10) comprises the formation on a substrate (16) of a network of walls (18) in order to bound the cells (18) parallel to said surface of the component, a filling of the cells with the substance or substances having an optical property, and the sealing of the cells on their side opposite from the substrate.

17. The process as claimed in any one of the preceding claims, in which the array of cells has a fill factor between 90% and 99.5% inclusive parallel to said surface of the component.

18. The process as claimed in claim 17, in which the fill factor is between 96% and 98.5% inclusive.

19. The process as claimed in any one of the preceding claims, in which the dimension of the cells parallel to the surface of the component is around 200 $\mu$m.

20. The process as claimed in any one of the preceding claims, in which the cells (15; 25) are separated by walls (18) with a thickness of between 0.10 $\mu$m and 5 $\mu$m parallel to the surface of the component.

21. The process as claimed in claim 20, in which the walls (18) have a thickness of between 0.10 $\mu$m and 0.35 $\mu$m.

22. The process as claimed in claim 20, in which the walls (18) have a thickness of between 0.40 $\mu$m and 2.00 $\mu$m.

23. The process as claimed in claim 22, in which the walls (18) have a thickness of between 2.00 $\mu$m and 3.5 $\mu$m inclusive.

24. The process as claimed in any one of the preceding claims, in which the array of cells (15; 25) constitutes a layer having a thickness of between 1 $\mu$m and 50 $\mu$m inclusive.

25. The process as claimed in claim 24, in which the array of cells (15; 25) constitutes a layer with a thickness of between 5 $\mu$m and 20 $\mu$m inclusive.

26. The process as claimed in any one of claims 1 to 18, in which the cells (15; 25) have dimensions parallel to the surface of the component of around 200 $\mu$m and are mutually separated by walls (18) having a thickness of around 2 $\mu$m, the array of cells constituting a layer with a thickness of 5 $\mu$m.

27. The process as claimed in any one of claims 1 to 18, in which the cells (15; 25) have dimensions parallel to the surface of the component of around 200 $\mu$m and are mutually separated by walls (18) having a thickness of around 3 $\mu$m, the array of cells constituting a layer with a thickness of 20 $\mu$m.

28. The process as claimed in any one of the preceding claims, in which the cells (15; 25) of the array are arranged in a lattice satisfying a crystal geometry chosen from a square, triangular, rectangular, octagonal or hexagonal geometry, and a combination of several of said geometries.

29. The process as claimed in claim 28, in which the cells (15; 25) of the array are arranged in a hexagonal-type lattice.

30. An optical component adapted for manufacturing of a transparent optical element selected from ophthalmic lenses, contact lenses, ocular implants, lenses for optical instruments, and optical sight lenses, said component comprising at least one transparent array of cells (15; 25) that are juxtaposed parallel to one surface of the component, each cell being bounded with walls and having dimensions between 100 $\mu$m and 500 $\mu$m parallel to the surface of the component, each cell being hermetically sealed and containing a substance having an optical property.

31. The optical component as claimed in claim 30, comprising a rigid transparent substrate (16) on which the array of cells (15) is formed.

32. The optical component as claimed in claim 30, comprising a rigid transparent substrate (16) onto which a transparent film (27) incorporating the array of cells (25) is transferred.

33. The optical component as claimed in claim 31 or 32, in which the rigid transparent substrate (16) is convex on the side having the array of cells.

34. The optical component as claimed in claim 31 or 32, in which the rigid transparent substrate (16) is concave on the side having the array of cells.

35. The optical component as claimed in claim 31 or 32, in which the rigid transparent substrate (16) is planar on the side having the array of cells.

36. The optical component as claimed in any one of claims 30 to 35, in which the substance having an optical property contained in at least certain of the cells (15; 25) is in liquid form.

37. The optical component as claimed in any one of claims 30 to 35, in which the substance having an optical property contained in at least certain of the cells (15; 25) is in gel form.

38. The optical component as claimed in any one of claims 30 to 37, in which the optical property is chosen from a coloration, photochromism, polarization or refractive-index property.

39. The optical component as claimed in claim 38, in which the optical property is a photochromism property.

40. The optical component as claimed in any one of claims 30 to 39, in which the array of cells (15; 25) includes several groups of cells containing different substances.

41. The optical component as claimed in any one of claims 30 to 40, in which several arrays of cells are stacked over the thickness of said component.

42. The optical component as claimed in claim 41, in which the stack comprises at least two stacked arrays of cells, each array of cells having identical optical properties, or each array of cells having different optical properties, or the cells within each array of cells having different optical properties.

43. The optical component as claimed in any one of claims 30 to 42, in which the array of cells has a fill factor between 90% and 99.5% inclusive, parallel to said surface of the component.

44. The optical component as claimed in claim 43, in which the fill factor is between 96% and 98.5% inclusive.

45. The optical component as claimed in any one of claims 30 to 44, in which the dimension of the cells parallel to the surface of the component is around 200 $\mu$m.

46. The optical component as claimed in any one of claims 30 to 45, in which the cells (15; 25) are separated by walls (18) having a thickness of between 0.10 $\mu$m and 5 $\mu$m, parallel to the surface of the component.

47. The optical component as claimed in claim 46, in which the walls (18) have a thickness of between 0.10 $\mu$m and 0.35 $\mu$m.

48. The optical component as claimed in claim 46, in which the walls (18) have a thickness of between 0.40 $\mu$m and 2.00 $\mu$m.

49. The optical component as claimed in claim 46, in which the walls (18) have a thickness of between 2.00 $\mu$m and 3.5 $\mu$m.

50. The optical component as claimed in any one of claims 30 to 49, in which the array of cells (15; 25) constitutes a layer having a thickness of between 1 $\mu$m and 50 $\mu$m inclusive.

51. The optical component as claimed in claim 50, in which the array of cells (15; 25) constitutes a layer with a thickness of between 5 $\mu$m and 20 $\mu$m inclusive.

52. The optical component as claimed in any one of claims 30 to 44, in which the cells (15; 25) have dimensions parallel to the surface of the component of around 200 $\mu$m and are mutually separated by walls (18) having a thickness of around 2 $\mu$m, the

array of cells constituting a layer with a thickness of 5 $\mu$m.

53. The optical component as claimed in any one of claims 30 to 44, in which the cells (15; 25) have dimensions parallel to the surface of the component of around 200 $\mu$m and are mutually separated by walls (18) having a thickness of around 3 $\mu$m, the array of cells constituting a layer with a thickness of 20 $\mu$m.

54. The optical component as claimed in any one of claims 30 to 53, in which the cells (15; 25) of the array are arranged in a lattice satisfying a crystalline geometry chosen from a square, triangular, rectangular, octagonal or hexagonal geometry, and a combination of several of said geometries.

55. The optical component as claimed in claim 54, in which the cells (15; 25) of the array are arranged in a hexagonal-type lattice.

56. A spectacle lens, produced by cutting an optical component (10) according to any one of claims 30 to 55.

57. The spectacle lens as claimed in claim 56, in which at least one hole is drilled through the component (10) in order to fasten the lens (11) to a spectacle frame.

58. The spectacle lens as claimed in claim 56 and 57, in which the substance contained in the cells (15; 25) is a photochromic substance.

FIG. 1

FIG. 2

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0728572 A
- US 20040008319 A
- US 5359444 A
- WO 03077012 A
- WO 03012542 A
- WO 0077570 A
- WO 0201281 A
- US 20020176963 A
- US 6327072 B

- US 6597340 B
- FR 2763070
- EP 0676401 A
- EP 0489655 A
- EP 0653428 A
- EP 0407237 A
- FR 2718447
- US 6281366 B
- EP 1204714 A

**Littérature non-brevet citée dans la description**

- **J-P. PEREZ.** Optique, Fondements et applications. DUNOD, Octobre 2004, 262